# FASCICULE DE BREVET EUROPEEN

(11) **EP 4 314 599 B1**
(45) Date de publication et mention de la délivrance du brevet: **03.09.2025**
(21) Numéro de dépôt: 22711272.9
(22) Date de dépôt: 01.03.2022
(51) Int. Cl.: F16H 61/4043, E02F 9/12, F16H 61/4148, F16H 61/433, E02F 9/22

(54) **SYSTEME D'ENTRAINEMENT AMELIORE POUR UN ORGANE DE VEHICULE OU D'ENGIN**
VERBESSERTES ANTRIEBSSYSTEM FÜR EIN ELEMENT EINES FAHRZEUGS ODER EINER MASCHINE
IMPROVED DRIVE SYSTEM FOR A MEMBER OF A VEHICLE OR A MACHINE

(30) Priorité: 30.03.2021 FR 2103277
(43) Date de publication de la demande: 07.02.2024
(73) Titulaire: Poclain Hydraulics Industrie, 60410 Verberie (FR)
(72) Inventeur: BESIC, Mufid, 60410 VERBERIE (FR); ERZNOZNIK, Matej, 60410 VERBERIE (FR); DESMYTTERE, Antoine, 60410 VERBERIE (FR); JAKA, Cadez, 60410 VERBERIE (FR)
(74) Mandataire: Cabinet Beau de Loménie
(86) Numéro de dépôt international: PCT/FR2022/050366
(87) Numéro de publication internationale: WO 2022/207990

(56) Documents cités:
- EP-A1- 0 942 103
- EP-A1- 2 048 370
- FR-A1- 2 860 560
- FR-A1- 2 873 175
- US-A1- 2008 317 574

## Description

### Domaine Technique

Le présent exposé concerne le domaine des circuits hydrauliques, et plus précisément des valves de commandes pouvant notamment être employées pour la rotation d'un organe de véhicule ou d'enfin, par exemple une tourelle d'un engin ou d'un équipement.

### Technique antérieure

Les organes montés mobiles en rotation, tels que les tourelles d'engins sont communément pilotés au moyen d'un circuit hydraulique, qui commande notamment la rotation de la tourelle.

La rotation de tels équipements est typiquement réalisée au moyen d'un circuit hydraulique comprenant deux valves à clapet, assurant chacune le pilotage en rotation dans un sens donné. On comprend cependant qu'une telle structure de circuit de pilotage nécessite donc une multiplication des composants, ce qui pose des problématiques de compacité et de coûts. Le document US2008/317574 présente un exemple de système hydraulique pour la rotation d'un organe.

Le présent exposé vise ainsi à répondre au moins partiellement à ces problématiques.

### Exposé de l'invention

A cet effet, le présent exposé concerne un système pour la rotation d'une organe tel qu'une tourelle d'engin, comprenant un circuit hydraulique reliant une source de pression à un moteur hydraulique adapté pour réaliser un mouvement de rotation de l'organe selon deux sens de rotation opposés,
le circuit hydraulique comprenant une valve proportionnelle, adaptée pour relier la source de pression au moteur hydraulique de manière à sélectivement l'entrainer en rotation dans un premier sens de rotation ou dans un second sens de rotation opposé au premier sens de rotation, la valve proportionnelle étant reliée au moteur hydraulique par une première conduite hydraulique et une seconde conduite hydraulique,
le circuit comprenant une valve de rotation, comprenant
   - une valve à tiroir, adaptée pour permettre un passage de fluide entre la première conduite hydraulique et la seconde conduite hydraulique à partir d'une valeur seuil de consigne de pression,
   - une ligne de pilotage comprenant un sélecteur de pression adapté pour prélever la pression la plus élevée entre la pression dans la première conduite hydraulique et la pression dans la seconde conduite hydraulique et un premier limiteur de débit,
ladite consigne résultant d'une première pression de commande, prélevée en aval du sélecteur de pression et en amont du premier limiteur de débit, et d'une seconde pression de commande, prélevée en aval du sélecteur de pression et du premier limiteur de débit,
la première pression de commande tendant à piloter la valve à tiroir pour permettre un passage du fluide, et la seconde pression de commande tendant à piloter la valve à tiroir pour empêcher un passage du fluide.

Selon un exemple, la ligne de pilotage comprend un organe de tarage positionné en aval du premier limiteur de débit et relié à un réservoir, la seconde pression de commande étant établie entre le premier limiteur de débit et l'organe de tarage.

Ledit organe de tarage est par exemple un second limiteur de débit, une portion de conduite hydraulique définissant une restriction, ou une soupape tarée

**En** variante, la ligne de pilotage comprend, une soupape tarée positionnée en aval du second limiteur de débit, ladite soupape tarée étant reliée à la première conduite hydraulique par un premier clapet anti retour, à la seconde conduite hydraulique par un second clapet anti retour, et à un réservoir via un clapet anti retour taré.

Selon un exemple, la soupape tarée présente un tarage variable, par exemple un tarage comprenant une commande hydraulique.

La soupape tarée comprend comprend alors typiquementun organe de pilotage adapté pour être actionné par un utilisateur, l'organe de pilotage étant adapté pour piloter la valve proportionnelle, et est par exemple configurée de manière à présenter une pression de tarage maximale lorsque l'organe de pilotage est actionné, et une pression de tarage minimale lorsque l'organe de pilotage n'est pas actionné.

Selon un exemple, la soupape tarée comprend comprend alors typiquementun organe de pilotage adapté pour être actionné par un utilisateur, l'organe de pilotage étant adapté pour piloter la valve proportionnelle, et présente un tarage progressif défini par une commande proportionnelle ou progressive générée par l'organe de pilotage.

Selon un exemple, le système comprend un organe de pilotage adapté pour être actionné par un utilisateur, l'organe de pilotage étant adapté pour piloter la valve proportionnelle.

Selon un exemple, le système comprend en outre un dispositif de freinage, adapté pour sélectivement immobiliser le moteur hydraulique.

Selon un exemple, le dispositif de freinage est configuré de manière à appliquer un effort de freinage maximum lorsque l'organe de pilotage n'est pas actionné.

Selon un exemple, la source de pression est une pompe hydraulique à cylindrée variable, unidirectionnelle, à commande de cylindrée asservie à une consigne de pression.

Selon un exemple, la valve proportionnelle est une valve du type 5/3, comprenant
- un premier orifice reliée à la pompe hydraulique,
- un deuxième orifice reliée à un réservoir,
- un troisième orifice relié à la première conduite hydraulique,
- un quatrième orifice relié à la seconde conduite hydraulique, et
- un cinquième orifice relié à une commande de cylindrée de la source de pression, typiquement de la pompe hydraulique,
la valve proportionnelle étant pilotée entre :
- une première configuration, dans laquelle le premier orifice est relié au troisième orifice et au cinquième orifice, et le deuxième orifice est relié au quatrième orifice,
- une deuxième configuration, dans laquelle le premier orifice est relié au quatrième orifice et au cinquième orifice, et le deuxième orifice est relié au troisième orifice, et
- une troisième configuration, dans laquelle le deuxième orifice est relié au cinquième orifice, et le premier orifice, le troisième orifice et le quatrième orifice sont obturés.

### Brève description des dessins

L'invention et ses avantages seront mieux compris à la lecture de la description détaillée faite ci-après de différents modes de réalisation de l'invention donnés à titre d'exemples non limitatifs.
[Fig. 1] La figure 1 présente une représentation d'un système selon un aspect de l'invention.
[Fig. 2] La figure 2 est une représentation schématique d'une valve de rotation présentée sur la figure 1.
[Fig. 3] La figure 3 est un exemple de structure pour la valve de rotation présentée sur la figure 2.

Sur l'ensemble des figures, les éléments en commun sont repérés par des références numériques identiques.

### Description des modes de réalisation

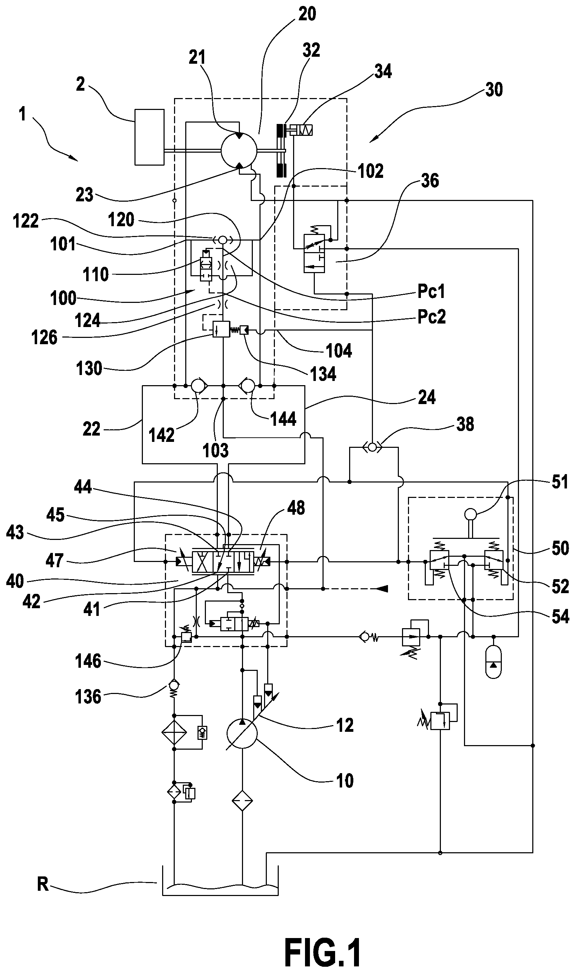

La figure 1 représente schématiquement un exemple de système selon un aspect de l'invention.

On représente sur cette figure le schéma hydraulique d'un système 1 d'entrainement en rotation d'un organe 2 de machine ou d'un engin tel qu'une tourelle de véhicule ou d'engin.

Le système tel que présenté comprend une source de pression 10, ici une pompe hydraulique 10, et un moteur hydraulique 20.

La pompe hydraulique 10 est typiquement une pompe hydraulique à cylindrée variable, unidirectionnelle, à commande de cylindrée asservie à une consigne de pression. Une telle pompe est communément désignée sous l'appellation en langue anglaise de pompe « load sensing ». En variante, la pompe hydraulique 10 est une pompe à cylindrée fixe associée à une valve de régulation de pression.

Le moteur hydraulique 20 présente un premier orifice 21 relié à une première conduite hydraulique 22 et un second orifice 23 relié à une seconde conduite hydraulique 24. Une valve proportionnelle 40 permet de sélectivement relier la première conduite hydraulique 22 et la seconde conduite hydraulique 24 à la pompe hydraulique 10 ou à un réservoir R, typiquement un réservoir à pression ambiante. Le moteur hydraulique 20 est typiquement un moteur hydraulique à pistons radiaux et came multilobes.

Le moteur hydraulique 20 est une machine hydraulique pouvant fonctionner selon deux sens de rotation, ce qui permet ainsi d'entrainer en rotation l'organe 2 selon deux sens de rotation opposés.

Le système 1 comprend ainsi une valve proportionnelle 40, adaptée pour relier la pompe hydraulique 10 à la première conduite hydraulique 22 ou à la seconde conduite hydraulique 24, et ainsi à entrainer le moteur hydraulique 20 dans le sens de rotation souhaité.

Dans l'exemple illustré, la valve proportionnelle 40 est une valve de type 5/3, c'est-à-dire une valve proportionnelle comprenant 5 orifices et 3 positions.

Dans le mode de réalisation représenté, la valve proportionnelle 40 présente ainsi :
- un premier orifice 41 reliée à la source de pression 10, ici à un refoulement de la pompe hydraulique 10,
- un deuxième orifice 42 reliée au réservoir R,
- un troisième orifice 43 relié à la première conduite hydraulique 22,
- un quatrième orifice 44 relié à la seconde conduite hydraulique 24, et
- un cinquième orifice 45 relié à une commande de cylindrée de la pompe hydraulique 10, ici un actionneur hydraulique.

La valve proportionnelle 40 est pilotée entre :
- Une première configuration, dans laquelle le premier orifice 41 est relié au troisième orifice 43 et au cinquième orifice 45, et le deuxième orifice 42 est relié au quatrième orifice 44. Cette configuration permet ainsi d'alimenter le moteur hydraulique 20 selon un premier sens de fonctionnement, et donc d'entrainer l'organe 2 en rotation selon un premier sens de rotation.
- Une deuxième configuration, dans laquelle le premier orifice 41 est relié au quatrième orifice 44 et au cinquième orifice 45, et le deuxième orifice 42 est relié au troisième orifice 43. Cette configuration permet ainsi d'alimenter le moteur hydraulique 20 selon un second sens de fonctionnement opposé au premier sens de fonctionnement, et donc d'entrainer l'organe 2 en rotation selon un premier sens de rotation opposé au premier sens de rotation.
- Une troisième configuration, dans laquelle le deuxième orifice 42 est relié au cinquième orifice 45, et le premier orifice 41, le troisième orifice 43 et le quatrième orifice 44 sont obturés. Cette configuration correspond ainsi à une configuration dans laquelle le moteur hydraulique 20 n'est pas alimenté.

Le pilotage de la valve proportionnelle 40 est réalisé au moyen d'une première commande hydraulique 47 et d'une seconde commande hydraulique 48. Dans sa configuration par défaut, c'est-à-dire en l'absence de consigne, la valve proportionnelle 40 telle que présentée est dans sa troisième configuration. La première commande hydraulique 47 est configurée de manière à faire basculer la valve proportionnelle 40 dans sa première configuration, et la seconde commande hydraulique 48 configurée de manière à faire basculer la valve proportionnelle 40 dans sa deuxième configuration. En variante, la valve proportionnelle 40 peut être pilotée électriquement.

Le circuit est adapté en fonction de la présence de la valve de régulation de pression, et définit des pressions de référence, de gavage, et de pilotage. Dans le cas d'une pompe hydraulique à cylindrée fixe, il n'est pas nécessaire d'avoir une ligne de pilotage de la cylindrée de pompe hydraulique 10 entre la valve proportionnelle 40 et la pompe hydraulique 10. La valve proportionnelle 40 est alors une valve de type 4/3, c'est-à-dire une valve proportionnelle comprenant 4 orifices et 3 positions.

Le système 1 comprend un organe de pilotage 50, adapté pour être manipulé ou actionné par un utilisateur. Il comprend un actionneur 51 qui peut par exemple être un levier, un interrupteur, ou tout autre moyen adapté.

L'organe de pilotage 50 tel que présenté comprend deux valves ; une première valve de pilotage 52 et une seconde valve de pilotage 54. Par défaut, la première valve de pilotage 52 et la seconde valve de pilotage 54 sont non passantes. La première valve de pilotage 52 et la seconde valve de pilotage 54 sont reliées à la pompe hydraulique 10, typiquement via un clapet anti retour taré et via une soupape tarée. En variante, la première valve de pilotage 52 et la seconde valve de pilotage 54 peuvent être reliée à une autre source de pression, par exemple un accumulateur hydraulique ou une pompe de gavage.

La manipulation de l'actionneur 51 permet de piloter la première valve de pilotage 52 et la seconde valve de pilotage 54 de manière à les rendre passantes, délivrant un débit proportionnel à une consigne appliquée via l'actionneur 51.

La première valve de pilotage 52 permet d'alimenter la première commande hydraulique 47 de la valve proportionnelle 40, et la seconde valve de pilotage 54 permet d'alimenter la seconde commande hydraulique 48 de la valve proportionnelle 40.

Ainsi, l'organe de pilotage 50 permet de définir le sens de circulation du fluide dans la première conduite hydraulique 22 et la seconde conduite hydraulique 24, et donc le sens de fonctionnement du moteur hydraulique 20, et ainsi le sens d'entrainement en rotation de l'organe 2. En variante, l'organe de pilotage 50 peut être à commande électrique.

Le système 1 proposé comprend un dispositif de freinage 30 adapté pour permettre d'immobiliser le moteur hydraulique 20 et en empêcher la rotation. Le dispositif de freinage 30 tel que présenté comprend un frein 32 actionné par un vérin 34. Le vérin 34 tel que présenté est par défaut dans une configuration de freinage maintenant le frein 32 engagé. Il présente une chambre de défreinage reliée à la pompe hydraulique 10 via une valve de défreinage 36. La valve de défreinage est pilotée par la pression en sortie de l'organe de pilotage 50. Elle est reliée à l'organe de pilotage 50 via un sélecteur de pression 38 sélectionnant la pression la plus élevée parmi la pressions délivrées par la première valve de pilotage 52 et la pression délivrée par la seconde valve de pilotage 54. En fonctionnement, l'actionnement de l'organe de pilotage par l'utilisateur va ainsi venir appliquer une pression dans la chambre de défreinage du vérin 34, et ainsi désengager le frein 32 pour permettre un mouvement de rotation du moteur hydraulique 20. La valve de défreinage 36 peut être tarée de manière à n'être passante que lorsque la pression en sortie de l'organe de pilotage 50 est supérieure ou égale à une valeur seuil donnée, par exemple égale à 3 bar. Un tel tarage permet ainsi d'assurer un maintien en position de l'organe 2 en cas de légères variations de la position de l'actionneur 51, ce qui permet ainsi d'éviter des déplacements accidentels de l'organe 2.

On comprend qu'on dispositif de freinage 30 d'un type différent peut être employé, par exemple un dispositif de freinage 30 qui n'applique pas un effort de freinage dans sa configuration par défaut.

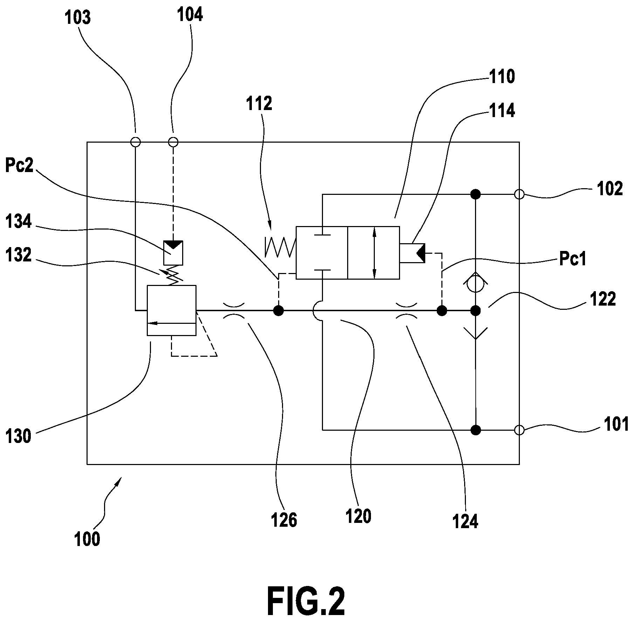

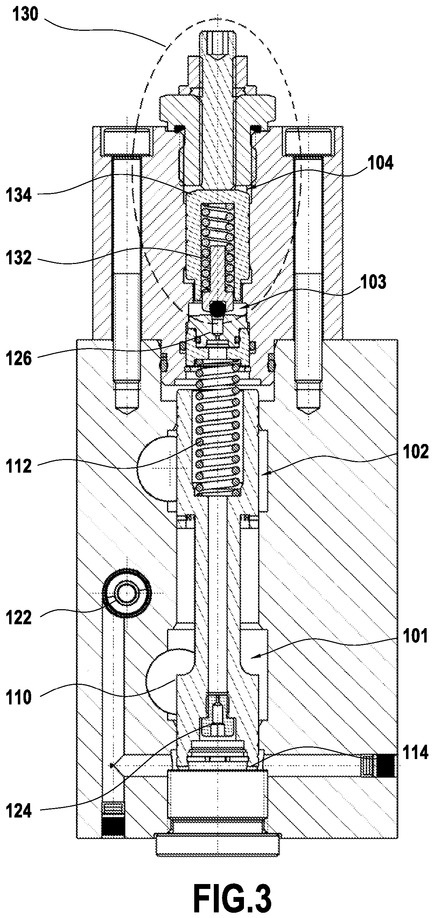

Le système 1 proposé comprend une valve de rotation 100 positionnée entre la première conduite hydraulique 22 et la seconde conduite hydraulique 24, adaptée pour réaliser un délestage en pression dans les conduites hydrauliques reliées au moteur hydraulique 20 et ainsi assurer un arrêt progressif en rotation de l'organe 2 pour éviter les mouvements brusques et/ou saccadés. On représente sur les figures 2 et 3 une vue schématique détaillée d'un circuit hydraulique équivalent et d'un exemple de structure de la valve de rotation 100.

La valve de rotation 100 telle que proposée comprend une valve à tiroir 110 et une ligne de pilotage 120.

La valve à tiroir 110 est adaptée pour permettre ou non un passage de fluide entre la première conduite hydraulique 22 et la seconde conduite hydraulique 24.

La ligne de pilotage 120 est adaptée pour permettre d'appliquer une consigne à la valve à tiroir 110.

La ligne de pilotage 120 est reliée à la première conduite hydraulique 22 et à la seconde conduite hydraulique 24 via un sélecteur de pression 122 pour prélever la pression la plus élevée entre la pression dans la première conduite hydraulique 22 et la pression dans la seconde conduite hydraulique 24.

En aval du sélecteur de pression 122, la ligne de pilotage 120 telle que représentée comprend successivement selon le sens de circulation du fluide :
- un premier limiteur de débit 124,
- un second limiteur de débit 126, et
- de manière optionnelle, une soupape tarée 130.

La valve à tiroir 110 est pilotée par une première pression de commande Pc1 prélevée dans la ligne de pilotage 120 entre le sélecteur de pression 122 et le premier limiteur de débit 124, et par une seconde pression de commande Pc2 prélevée entre le premier limiteur de débit 124 et le second limiteur de débit 126, à laquelle est couplé un moyen de rappel élastique 112 tel qu'un ressort. Dans l'exemple illustré, le premier limiteur de débit 124 et le second limiteur de débit 126 forment un ensemble communément désigné comme un « pont de gicleurs », qui permet d'établir une pression intermédiaire entre les deux limiteurs de débit 124 et 126, en l'occurrence la seconde pression de commande Pc2. La soupape tarée 130 et le second limiteur de débit 126 peuvent être un même composant. Par exemple la soupape tarée 130 peut par construction intégrer la fonction de limiteur de débit 126.

On comprend cependant que ce montage n'est pas limitatif ; le second limiteur de débit 126 peut être remplacé par tout organe assurant une retenue de la pression et permettant ainsi l'établissement de la seconde pression de commande Pc2, par exemple une soupape tarée ou une portion de canalisation ayant une section réduite. On pourra ainsi définir de manière générale un organe de tarage positionné en aval du premier limiteur de débit 124, adapté pour définir une pression de référence en aval du premier limiteur de débit 124. Cet organe de tarage peut par exemple être relié au réservoir R via d'autres éléments tels que des clapets anti retour tarés, ou à un circuit de gavage ou de pilotage.

La première pression de commande Pc1 actionne une commande hydraulique 114 qui tend à piloter la valve à tiroir 110 pour permettre un passage du fluide, et la seconde pression de commande Pc2 tend à piloter la valve à tiroir 110 pour empêcher un passage du fluide. La valve à tiroir 110 est du type tout ou rien. Dans la configuration illustrée, la valve à tiroir 110 est passante dès lors que la première pression de commande Pc1 applique un effort supérieur au cumul de l'effort appliqué par la seconde pression de commande Pc2 et à l'effort appliqué par le moyen de rappel élastique 112, et n'est donc pas passante dès que la première pression de commande Pc1 applique un effort inférieur au cumul de l'effort appliqué par la seconde pression de commande Pc2 et à l'effort appliqué par le moyen de rappel élastique 112.

La soupape tarée 130 est pilotée par une commande hydraulique 134 alimentée via une ligne de tarage 104 par la pression délivrée par le sélecteur de pression 38 couplée à un moyen de rappel réglable 132 tel qu'un ressort, l'association des deux efforts en résultant définissant le tarage de la soupape tarée 130. Dans l'exemple illustré sur la figure 3, la soupape tarée 130 est assemblée sur la valve à tiroir 110, par exemple par boulonnage. La soupape tarée 130 présente typiquement un tarage progressif défini par une commande proportionnelle, ou progressive générée par l'organe de pilotage 50. Le tarage de la soupape tarée 130 peut être réalisé par tout moyen adapté, et ne se limite pas à un tarage hydraulique. Le tarage peut par exemple être réalisé via une tare électrique ou tout autre moyen adapté. Par exemple, l'actionneur 51 peut être électrique, et être relié à un contrôleur ou à une unité électronique de commande non représentée, par exemple un calculateur, adaptée pour actionner la valve proportionnelle 50 et la valve de défreinage 36 par une commande électrique, et pour envoyer une consigne de tarage électrique sur la soupape tarée 130. La soupape tarée 130 est optionnelle. La ligne de pilotage 120 peut être reliée au réservoir R en aval du second limiteur de débit 126, qui est alors calibré de manière appropriée.

Dans l'exemple illustré, en aval de la soupape tarée 130, la ligne de pilotage 120 est reliée à la première conduite hydraulique 22 par un premier clapet anti retour 142, à la seconde conduite hydraulique 24 par un second clapet anti retour 144, et au réservoir R par un clapet anti retour taré 136. Une telle configuration est optionnelle.

Le gavage du circuit hydraulique peut être réalisé via le premier clapet anti retour 142 et le second clapet anti retour 144. Dans l'exemple illustré sur la figure 1, la pompe hydraulique 10 est reliée au premier clapet anti retour 142 et au second clapet anti retour 144 via une soupape tarée 146 permettant ainsi de réaliser une fonction de gavage du circuit hydraulique afin que la pression y soit maintenue au moins égale à la pression de tarage du clapet anti retour taré 136. En variante, le système peut comprendre une pompe de gavage reliée au circuit hydraulique via un circuit de gavage configuré de manière à ce que la pompe de gavage assure un maintien de premier conduit hydraulique 22 et du second conduit hydraulique 24 à une pression supérieure ou égale à une pression de gavage prédéterminée lorsque le système est en fonctionnement.

La valve de rotation 100 peut être un élément rapporté sur le moteur hydraulique 20. Les conduits d'alimentation et de refoulement du moteur hydraulique 20 peuvent ainsi être reliés directement à la valve de rotation 100.

On décrit à présent un exemple de fonctionnement du système 1 présenté.

Par défaut, c'est-à-dire lorsque l'actionneur 51 n'est pas manipulé par un utilisateur, le moteur hydraulique 20 n'est pas entrainé en rotation, et est maintenu immobilisé par le dispositif de freinage 30. L'organe 2 est ainsi maintenu en position.

Pour déplacer l'organe 2, l'utilisateur actionne l'organe de pilotage 50.

Pour illustrer, on va ici considérer que l'utilisateur manipule l'actionneur 51 de l'organe de pilotage 50 de manière à venir activer la première valve de pilotage 52 (on comprend que le fonctionnement sera similaire si l'utilisateur manipule l'actionneur 51 de l'organe de pilotage 50 de manière à venir activer la seconde valve de pilotage 54).

La première valve de pilotage 52 vient alors appliquer une pression de commande à la première commande hydraulique 47 de la valve proportionnelle 40, ce qui va ainsi faire basculer la valve proportionnelle 40 dans sa première configuration.

La pompe hydraulique 10 délivre ainsi une pression dans la première conduite hydraulique 22. Le premier orifice 21 du moteur hydraulique 20 est ainsi son admission ou orifice haute pression, et son second orifice 23 est le refoulement ou orifice basse pression, ce qui correspond à un fonctionnement dans un premier sens du moteur hydraulique 20

De manière simultanée, la valve de défreinage 36 est actionnée via le sélecteur de pression 38. Une pression est ainsi appliquée dans la chambre de défreinage du vérin 34, qui vient désengager le frein 32 et ainsi permettre une mise en rotation du moteur hydraulique 20.

Lors de l'établissement de la pression dans la première conduite hydraulique 22 et la seconde conduite hydraulique 24, la valve de rotation va réaliser une fonction de délestage en pression entre ces deux conduites.

La valve à tiroir 110 est initialement non passante, du fait de l'action du moyen de rappel élastique 112 qui la maintient par défaut en configuration non passante.

Lors de l'établissement de la haute pression dans la première conduite hydraulique 22, cette haute pression est appliquée dans la ligne de pilotage 120 via le sélecteur de pression 122. La première pression de pilotage Pc1 est ainsi égale à la pression au sein de la première conduite hydraulique, c'est-à-dire la pression appliquée au premier orifice 21 du moteur hydraulique 20. La seconde pression de pilotage Pc2 est quant à elle initialement inférieure à la première pression de pilotage Pc1, du fait de la présence du premier limiteur de débit 124. Ainsi, lors de l'établissement de la haute pression dans la première conduite hydraulique 22, la valve à tiroir 110 bascule dans sa configuration passante, et permet un passage de fluide entre la première conduite hydraulique 22 et la seconde conduite hydraulique 24, ce qui tend donc à équilibrer la pression entre la première conduite hydraulique 22 et la seconde conduite hydraulique 24.

La seconde pression de commande Pc2 augmente ensuite progressivement au fur et à mesure que le fluide passe par le premier limiteur de débit 124. La différence entre l'effort exercé par la première pression de commande Pc1 d'une part, et l'effort appliqué par la seconde pression de commande Pc2 et à l'effort appliqué par le moyen de rappel élastique 112 d'autre part diminue ainsi progressivement, jusqu'à ce que l'effort appliqué par la seconde pression de commande Pc2 et à l'effort appliqué par le moyen de rappel élastique 112 devienne supérieur à effort exercé par la première pression de commande Pc1, ce qui ramène alors la valve à tiroir 110 dans sa configuration non passante et stoppe donc le passage de fluide entre la première conduite hydraulique 22 et la seconde conduite hydraulique 24.

La soupape tarée 130 est ici à son tarage maximum ce qui évite l'échappement de fluide, et permet l'établissement d'une pression élevée dans la ligne de pilotage 120 et une accélération maximale lors de la mise en rotation de l'organe 2. Lorsque la pression de tarage est dépassée, l'excédent est déversé dans la conduite hydraulique parmi la première conduite hydraulique 22 et la seconde conduite hydraulique 24 ayant la pression la plus faible, ou dans le réservoir R.

Lorsque l'utilisateur arrête ensuite d'actionner l'organe de pilotage 50, la première valve de pilotage 52 rebascule dans une configuration non passante, sachant que la seconde valve de pilotage 54 était déjà non passante.

La valve proportionnelle 40 n'est alors plus pilotée, et rebascule dans sa configuration par défaut, c'est-à-dire sa troisième configuration. La pompe hydraulique 10 n'est alors plus reliée à la première conduite hydraulique 22 ni à la seconde conduite hydraulique 24. Sa cylindrée se réduit à une valeur minimale.

La valve de défreinage 36 n'est par ailleurs plus pilotée. La pression dans la chambre de défreinage du vérin 34 est déchargée vers le réservoir R, et le vérin actionne le frein 32, entrainant une immobilisation du moteur hydraulique 20 et de l'organe 2.

La valve de rotation 100 permet quant à elle d'amortir l'arrêt en rotation du moteur hydraulique 20, pour éviter un arrêt brutal. La pression dans la ligne de pilotage 120 est déchargée via la soupape tarée 130 vers le réservoir R dans la mesure où le tarage de la soupape tarée 130 prend ici sa valeur minimale.

La seconde pression de commande Pc2 diminue alors, ce qui entraine un passage de fluide via la valve à tiroir 110 depuis la première conduite hydraulique 22 vers la seconde conduite hydraulique 24 jusqu'à ce que la pression dans la première conduite hydraulique 22 et la pression dans la seconde conduite hydraulique 24 soient équilibrées, la pression étant déchargée dans le réservoir R jusqu'à atteindre la valeur minimale du tarage de la soupape tarée 130. La valve de rotation 100 réalise ainsi une décharge de la pression, et va ainsi permettre d'éviter un arrêt brusque du moteur hydraulique 20 et donc d'éviter un arrêt brusque de l'organe 2.

Le fonctionnement pour un entrainement en sens inverse suit le même principe. L'utilisateur actionne alors l'organe de commande 50 pour piloter la seconde valve de pilotage 54. La seconde conduite hydraulique 24 est alors la conduite haute pression reliée à la pompe hydraulique 10 et à l'admission du moteur hydraulique 20, tandis que la première conduite hydraulique 22 est reliée au refoulement du moteur hydraulique 20 et au réservoir R.

La valve de rotation 100 telle que proposée permet ainsi d'éviter les pics de pression dans la première conduite hydraulique 22 et la seconde conduite hydraulique 24 en réalisant un transfert de pression entre ces deux conduites lors de l'établissement de la pression, ce transfert de pression étant dégressif. Le système 1 proposé permet d'assurer une accélération rapide lors de la mise en mouvement du moteur hydraulique 20 et donc lors de la mise en mouvement de l'organe 2, et une décélération sans à-coups lors du freinage.

Le système 1 tel que proposé permet notamment d'éviter l'utilisation de deux valves pour réaliser une telle fonction, et est donc avantageux en termes de compacité et de coût.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. **En** particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système (1) pour la rotation d'un organe (2), comprenant un circuit hydraulique reliant une source de pression (10) à un moteur hydraulique (20) adapté pour réaliser un mouvement de rotation de l'organe (2) selon deux sens de rotation opposés,
le circuit hydraulique comprenant une valve proportionnelle (40), adaptée pour relier la source de pression (10) au moteur hydraulique (20) de manière à sélectivement l'entrainer en rotation dans un premier sens de rotation ou dans un second sens de rotation opposé au premier sens de rotation, la valve proportionnelle (40) étant reliée au moteur hydraulique (20) par une première conduite hydraulique (22) et une seconde conduite hydraulique (24),
le circuit étant **caractérisé en ce qu'**il comprend une valve de rotation (100), comprenant
- une valve à tiroir (110), adaptée pour permettre un passage de fluide entre la première conduite hydraulique (22) et la seconde conduite hydraulique (24) à partir d'une valeur seuil de consigne de pression,
- une ligne de pilotage (120) comprenant un sélecteur de pression (122) adapté pour prélever la pression la plus élevée entre la pression dans la première conduite hydraulique (22) et la pression dans la seconde conduite hydraulique (24) et un premier limiteur de débit (124),
ladite consigne résultant d'une première pression de commande (Pc1), prélevée en aval du sélecteur de pression (122) et en amont du premier limiteur de débit (124), et d'une seconde pression de commande (Pc2), prélevée en aval du sélecteur de pression (122) et du premier limiteur de débit (124),
la première pression de commande (Pc1) tendant à piloter la valve à tiroir (110) pour permettre un passage du fluide, et la seconde pression de commande (Pc2) tendant à piloter la valve à tiroir (110) pour empêcher un passage du fluide.

2. Système (1) selon la revendication 1, dans lequel la ligne de pilotage (120) comprend un organe de tarage positionné en aval du premier limiteur de débit (124) et relié à un réservoir (R), la seconde pression de commande (Pc2) étant établie entre le premier limiteur de débit (124) et l'organe de tarage.

3. Système selon la revendication 2, dans lequel ledit organe de tarage est un second limiteur de débit (126), une portion de conduite hydraulique définissant une restriction, ou une soupape tarée.

4. Système (1) selon l'une des revendications 2 ou 3, dans lequel la ligne de pilotage (120) comprend, une soupape tarée (130) positionnée en aval de l'organe de tarage, ladite soupape tarée (130) étant reliée à la première conduite hydraulique (22) par un premier clapet anti retour (142), à la seconde conduite hydraulique (24) par un second clapet anti retour (144), et à un réservoir (R) via un clapet anti retour taré (136).

5. Système selon la revendication 4, dans lequel la soupape tarée (130) présente un tarage variable.

6. Système selon la revendication 5, comprenant un organe de pilotage (50) adapté pour être actionné par un utilisateur, l'organe de pilotage (50) étant adapté pour piloter la valve proportionnelle (40), dans lequel la soupape tarée (130) est configurée de manière à présenter une pression de tarage maximale lorsque l'organe de pilotage (50) est actionné, et une pression de tarage minimale lorsque l'organe de pilotage (50) n'est pas actionné.

7. Système suivant la revendication 5, comprenant un organe de pilotage (50) adapté pour être actionné par un utilisateur, l'organe de pilotage (50) étant adapté pour piloter la valve proportionnelle (40), dans lequel la soupape tarée (130) présente un tarage progressif défini par une commande proportionnelle ou progressive générée par l'organe de pilotage (50).

8. Système selon l'une des revendications 1 à 5, comprenant un organe de pilotage (50) adapté pour être actionné par un utilisateur, l'organe de pilotage (50) étant adapté pour piloter la valve proportionnelle (40).

9. Système selon l'une des revendications 1 à 8 comprenant en outre un dispositif de freinage (30), adapté pour sélectivement immobiliser le moteur hydraulique (20).

10. Système selon les revendications 8 et 9, dans lequel le dispositif de freinage (30) est configuré de manière à appliquer un effort de freinage maximum lorsque l'organe de pilotage (50) n'est pas actionné.

11. Système (1) selon l'une des revendications 1 à 10, dans lequel la source de pression (10) est une pompe hydraulique à cylindrée variable, unidirectionnelle, à commande de cylindrée asservie à une consigne de pression.

12. Système (1) selon la revendication 11, dans lequel la valve proportionnelle (40) est une valve du type 5/3, comprenant
- un premier orifice (41) reliée à un refoulement de la pompe hydraulique (10),
- un deuxième orifice (42) reliée à un réservoir (R),
- un troisième orifice (43) relié à la première conduite hydraulique (22),
- un quatrième orifice (44) relié à la seconde conduite hydraulique (24), et
- un cinquième orifice (45) relié à une commande de cylindrée (12) de la source de pression (10),
la valve proportionnelle étant (40) pilotée entre :
- une première configuration, dans laquelle le premier orifice (41) est relié au troisième orifice (43) et au cinquième orifice (45), et le deuxième orifice (42) est relié au quatrième orifice (44),
- une deuxième configuration, dans laquelle le premier orifice (41) est relié au quatrième orifice (44) et au cinquième orifice (45), et le deuxième orifice (42) est relié au troisième orifice (43), et
- une troisième configuration, dans laquelle le deuxième orifice (42) est relié au cinquième orifice (45), et le premier orifice (41), le troisième orifice (43) et le quatrième orifice (44) sont obturés.

## Patentansprüche

1. System (1) zum Drehen eines Elements (2), umfassend einen Hydraulikkreis, der eine Druckquelle (10) mit einem Hydraulikmotor (20) verbindet, der angepasst ist, um eine Drehbewegung des Elements (2) in zwei entgegengesetzten Drehrichtungen durchzuführen,
der Hydraulikkreis umfassend ein Proportionalventil (40), das angepasst ist, um die Druckquelle (10) mit dem Hydraulikmotor (20) zu verbinden, um ihn selektiv in einer ersten Drehrichtung oder in einer zweiten Drehrichtung entgegengesetzt zu der ersten Drehrichtung zu drehen, wobei das Proportionalventil (40) über eine erste Hydraulikleitung (22) und eine zweite Hydraulikleitung (24) mit dem Hydraulikmotor (20) verbunden ist,
wobei der Kreislauf **dadurch gekennzeichnet ist, dass** er ein Drehventil (100) umfasst, umfassend
- ein Schieberventil (110), das angepasst ist, um anhand eines Vorgabedruck-Schwellenwerts einen Fluiddurchgang zwischen der ersten Hydraulikleitung (22) und der zweiten Hydraulikleitung (24) zu ermöglichen,
- eine Vorsteuerleitung (120), umfassend einen Druckwähler (122), angepasst ist, um den höheren Druck zwischen dem Druck in der ersten Hydraulikleitung (22) und dem Druck in der zweiten Hydraulikleitung (24) zu entnehmen, und einen ersten Durchflussbegrenzer (124),
wobei der Vorgabewert aus einem ersten Vorsteuerdruck (Pc1), der stromabwärts von dem Druckwähler (122) und stromaufwärts von dem ersten Durchflussbegrenzer (124) entnommen wird, und aus einem zweiten Vorsteuerdruck (Pc2), der stromabwärts von dem Druckwähler (122) und von dem ersten Durchflussbegrenzer (124) entnommen wird, resultiert,
der erste Steuerdruck (Pc1) dazu neigt, das Schieberventil (110) anzusteuern, um einen Durchgang des Fluids zu ermöglichen, und der zweite Steuerdruck (Pc2) dazu neigt, das Schieberventil (110) anzusteuern, um einen Durchgang des Fluids zu verhindern.

2. System (1) nach Anspruch 1, wobei die Vorsteuerleitung (120) ein Tarierelement umfasst, das stromabwärts von dem ersten Durchflussbegrenzer (124) positioniert und mit einem Speicher (R) verbunden ist, wobei der zweite Steuerdruck (Pc2) zwischen dem ersten Durchflussbegrenzer (124) und dem Tarierelement aufgebaut wird.

3. System nach Anspruch 2, wobei das Tarierelement ein zweiter Durchflussbegrenzer (126), ein Abschnitt einer Hydraulikleitung, der eine Drossel definiert, oder ein Tarierventil ist.

4. System (1) nach einem der Ansprüche 2 oder 3, wobei die Vorsteuerleitung (120) ein tariertes Ventil (130) umfasst, das stromabwärts von dem Tarierelement positioniert ist, wobei das tarierte Ventil (130) über ein erstes Rückschlagventil (142) mit der ersten Hydraulikleitung (22), über ein zweites Rückschlagventil (144) mit der zweiten Hydraulikleitung (24) und über ein tariertes Rückschlagventil (136) mit einem Speicher (R) verbunden ist.

5. System nach Anspruch 4, wobei das tarierte Ventil (130) eine variable Tarierung aufweist.

6. System nach Anspruch 5, umfassend ein Vorsteuerelement (50), das angepasst ist, um von einem Benutzer betätigt zu werden, wobei das Vorsteuerelement (50) angepasst ist, um das Proportionalventil (40) anzusteuern, wobei das tarierte Ventil (130) konfiguriert ist, um einen maximalen Tarierdruck, wenn das Vorsteuerelement (50) betätigt wird, und einen minimalen Tarierdruck, wenn das Vorsteuerelement (50) nicht betätigt wird, aufzuweisen.

7. System nach Anspruch 5, umfassend ein Vorsteuerelement (50), das angepasst ist, um von einem Benutzer betätigt zu werden, wobei das Vorsteuerelement (50) angepasst ist, um das Proportionalventil (40) anzusteuern, wobei das tarierte Ventil (130) eine progressive Tarierung aufweist, die durch eine von dem Vorsteuerelement (50) erzeugte proportionale oder progressive Steuerung definiert ist.

8. System nach einem der Ansprüche 1 bis 5, mit einem Vorsteuerelement (50), das angepasst ist, um von einem Benutzer betätigt zu werden, wobei das Vorsteuerelement (50) angepasst ist, um das Proportionalventil (40) anzusteuern.

9. System nach einem der Ansprüche 1 bis 8, ferner umfassend eine Bremsvorrichtung (30) umfasst, die angepasst ist, um den Hydraulikmotor (20) selektiv festzustellen.

10. System nach den Ansprüchen 8 und 9, wobei die Bremsvorrichtung (30) konfiguriert ist, um eine maximale Bremskraft aufzubringen, wenn das Vorsteuerelement (50) nicht betätigt ist.

11. System (1) nach einem der Ansprüche 1 bis 10, wobei die Druckquelle (10) eine hydraulische Verstellpumpe ist, die in einer Richtung arbeitet und deren Hubvolumen durch eine Druckvorgabe gesteuert wird.

12. System (1) nach Anspruch 11, wobei das Proportionalventil (40) ein Ventil vom 5/3-Typ ist, umfassend
- eine erste Öffnung (41), die mit einem Auslass der Hydraulikpumpe (10) verbunden ist,
- eine zweite Öffnung (42), die mit einem Speicher (R) verbunden ist,
- eine dritte Öffnung (43), die mit der ersten Hydraulikleitung (22) verbunden ist,
- eine vierte Öffnung (44), die mit der zweiten Hydraulikleitung (24) verbunden ist, und
- eine fünfte Öffnung (45), die mit einer Verdrängungssteuerung (12) der Druckquelle (10) verbunden ist,
wobei das Proportionalventil vorgesteuert (40) wird zwischen:
- einer ersten Konfiguration, in der die erste Öffnung (41) mit der dritten Öffnung (43) und der fünften Öffnung (45) verbunden ist und die zweite Öffnung (42) mit der vierten Öffnung (44) verbunden ist,
- einer zweiten Konfiguration, in der die erste Öffnung (41) mit der vierten Öffnung (44) und der fünften Öffnung (45) verbunden ist und die zweite Öffnung (42) mit der dritten Öffnung (43) verbunden ist, und
- einer dritten Konfiguration, in der die zweite Öffnung (42) mit der fünften Öffnung (45) verbunden ist und die erste Öffnung (41), die dritte Öffnung (43) und die vierte Öffnung (44) verschlossen sind.

## Claims

1. A system (1) for rotating a member (2), comprising a hydraulic circuit connecting a pressure source (10) to a hydraulic motor (20) adapted to perform a rotational movement of the member (2) along two opposite directions of rotation,
the hydraulic circuit comprising a proportional valve (40), adapted to connect the pressure source (10) to the hydraulic motor (20) so as to selectively drive it in rotation in a first direction of rotation or in a second direction of rotation opposite the first direction of rotation, the proportional valve (40) being connected to the hydraulic motor (20) by a first hydraulic line (22) and a second hydraulic line (24), the circuit being **characterized in that** it comprises a rotation valve (100), comprising
- a slide valve (110), adapted to allow a passage of fluid between the first hydraulic line (22) and the second hydraulic line (24) from a pressure setpoint threshold value,
- a control line (120) comprising a pressure selector (122) adapted to take the highest pressure between the pressure in the first hydraulic line (22) and the pressure in the second hydraulic line (24) and a first flow limiter (124),
said setpoint resulting from a first control pressure (Pc1), taken downstream of the pressure selector (122) and upstream of the first flow limiter (124), and from a second control pressure (Pc2), taken downstream of the pressure selector (122) and of the first flow limiter (124),
the first control pressure (Pc1) tending to control the slide valve (110) to allow passage of the fluid, and the second control pressure (Pc2) tending to control the slide valve (110) to prevent passage of the fluid.

2. The system (1) according to claim 1, wherein the control line (120) comprises a calibration member positioned downstream of the first flow limiter (124) and connected to a reservoir (R), the second pressure control (Pc2) being established between the first flow limiter (124) and the calibration member.

3. The system according to claim 2, wherein said calibration member is a second flow limiter (126), a hydraulic line portion defining a restriction, or a calibrated valve.

4. The system (1) according to one of claims 2 or 3, wherein the control line (120) comprises a calibrated valve (130) positioned downstream of the calibration member, said calibrated valve (130) being connected to the first hydraulic line (22) by a first check valve (142), to the second hydraulic line (24) by a second check valve (144), and to a reservoir (R) via a calibrated check valve (136).

5. The system according to claim 4, wherein the calibrated valve (130) has variable calibration.

6. The system according to claim 5, comprising a control member (50) adapted to be actuated by a user, the control member (50) being adapted to control the proportional valve (40), wherein the calibrated valve (130) is configured so as to have a maximum calibrated pressure when the control member (50) is actuated, and a minimum calibrated pressure when the control member (50) is not actuated.

7. The system according to claim 5, comprising a control member (50) adapted to be actuated by a user, the control member (50) being adapted to control the proportional valve (40), wherein the calibrated valve (130) has a progressive calibration defined by a proportional or progressive command generated by the control member (50).

8. The system according to one of claims 1 to 5, comprising a control member (50) adapted to be actuated by a user, the control member (50) being adapted to control the proportional valve (40).

9. The system according to one of claims 1 to 8, further comprising a braking device (30), adapted to selectively immobilize the hydraulic motor (20).

10. The system according to claims 8 and 9, wherein the braking device (30) is configured so as to apply a maximum braking force when the steering member (50) is not actuated.

11. The system (1) according to one of claims 1 to 10, wherein the pressure source (10) is a hydraulic pump with variable displacement, unidirectional, with displacement control governed by a pressure setpoint.

12. The system (1) according to claim 11, wherein the proportional valve (40) is a 5/3 type valve, comprising
- a first port (41) connected to a discharge of the hydraulic pump (10),
- a second port (42) connected to a reservoir (R),
- a third port (43) connected to the first hydraulic line (22),
- a fourth port (44) connected to the second hydraulic line (24), and
- a fifth port (45) connected to a displacement control (12) of the pressure source (10),
the proportional valve being (40) controlled between:
- a first configuration, in which the first port (41) is connected to the third port (43) and to the fifth port (45), and the second port (42) is connected to the fourth port (44),
- a second configuration, in which the first port (41) is connected to the fourth port (44) and to the fifth port (45), and the second port (42) is connected to the third port (43), and
- a third configuration, in which the second port (42) is connected to the fifth port (45), and the first port (41), the third port (43) and the fourth port (44) are closed off.
